# EUROPEAN PATENT SPECIFICATION

(11) **EP 4 343 536 B1**
(45) Date of publication and mention of the grant of the patent: **21.01.2026**
(21) Application number: 21947019.2
(22) Date of filing: 22.06.2021
(51) Int. Cl.: G06F 7/58, G02B 5/30, G02B 27/28

(54) **RANDOM NUMBER GENERATION DEVICE**
ZUFALLSZAHLENGENERATOR
DISPOSITIF DE GÉNÉRATION DE NOMBRE ALÉATOIRE

(43) Date of publication of application: 27.03.2024
(73) Proprietor: MITSUBISHI ELECTRIC CORPORATION, Chiyoda-ku Tokyo 100-8310 (JP)
(72) Inventor: KOSHIKAWA, Shota, Tokyo 100-8310 (JP)
(74) Representative: Pfenning, Meinig & Partner mbB
(86) International application number: PCT/JP2021/023499
(87) International publication number: WO 2022/269731

(56) References cited:
- JP-A- 2018 513 506
- JP-A- 2019 021 137
- US-A1- 2019 384 576
- HERRERO-COLLANTES MIGUEL ET AL: "Quantum random number generators", vol. 89, no. 1, 21 October 2016 (2016-10-21), pages 1 - 54, XP055804089, ISSN: 0034-6861, Retrieved from the Internet <URL:https://arxiv.org/pdf/1604.03304.pdf> [retrieved on 20210512], DOI: 10.1103/RevModPhys.89.015004

## Description

### TECHNICAL FIELD

The present disclosure relates to a random number generation device that detects photons and generates a random number.

### BACKGROUND ART

Some conventional random number generation devices each detect photons and generate a random number.

For example, Patent Literature 1 discloses a random number generation device which detects photons for each polarization state and generates a random number.

Concretely, the random number generating device divides photons into photons in a vertically polarized light state and photons in a horizontally polarized light state, and generates "1" when a first photon detector detects a photon in the vertically polarized light state and generates "0" when a second photon detector detects a photon in the horizontally polarized light state. At this time, because the division into photons in the vertically polarized light state and photons into the horizontally polarized light state is made randomly with predetermined probabilities, the random number generation device generates a random number sequence in which "1" and "0" appear randomly.

US2019384576A1 discloses an optical system using a multi-layered birefringent structure that receives an input beam that may be non-coherent or coherent, and produces a randomization energy from the input beam, by creating birefringent induced beam subdivisions as the beam passes through each birefringent layer, where after the beam has passed through a threshold number of birefringent layers, a randomized energy distribution is created. That randomized energy distribution is read by a photodetector and converted into a random number by a randomization processing device.

### CITATION LIST

### PATENT LITERATURE

Patent Literature 1: JP 2003-36168 A

### SUMMARY OF INVENTION

### TECHNICAL PROBLEM

However, a problem with the random number generation device of Patent Literature 1 is that the random number generation device must include the multiple photon detectors which are the first photon detector and the second photon detector.

The present disclosure is made to solve the aforementioned problem, and it is an object of the present disclosure to provide a random number generation device that does not have to include multiple photon detectors.

### SOLUTION TO PROBLEM

The invention is defined in the appended set of claims. A random number generation device of the present disclosure includes: a photon generation unit to generate and output a photon; a first polarization unit to convert a photon inputted to the first polarization unit into polarized light in a first polarization direction, and to output the polarized light; a second polarization unit to convert a photon inputted to the second polarization unit into polarized light in a second polarization direction, and to output the polarized light, the second polarization unit being able to change the second polarization direction; a photon detection unit to receive a photon outputted from the photon generation unit via the first polarization unit and the second polarization unit, and to detect the photon; and a random number generation unit to generate a random number using a detection result by the photon detection unit and depending on whether the number of photons detected within a unit time period is equal to or larger than a predetermined threshold.

### ADVANTAGEOUS EFFECTS OF INVENTION

According to the present disclosure, because what is necessary is just to provide a single photon detection unit, a random number generation device that does not have to include multiple photon detectors can be provided.

### BRIEF DESCRIPTION OF DRAWINGS

Fig. 1 is a diagram showing an example of the configuration of a random number generation device according to the present disclosure;
Fig. 2 is a view explaining a relation between a first polarization unit and a second polarization unit in the random number generation device;
Fig. 3 is a view explaining a case in which an angle θ which a polarization direction of the first polarization unit forms with a polarization direction of the second polarization unit in the random number generation device is zero;
Fig. 4 is a view explaining a case in which the angle θ which the polarization direction of the first polarization unit forms with the polarization direction of the second polarization unit in the random number generation device is π/4;
Fig. 5A is a view schematically showing the probability distribution of the number of detected photons in the case of θ=0 (rad), and Fig. 5B is a view schematically showing the probability distribution of the number of detected photons in the case of θ=π/4 (rad);
Fig. 6 is a flowchart showing the operation of the random number generation device;
Fig. 7 is a flowchart showing the processing of a random number generation unit in the random number generation device;
Fig. 8 is a view showing an example of the hardware configuration of a polarization direction control unit, the random number generation unit and a control unit in the random number generation device; and
Fig. 9 is a view showing another example of the hardware configuration of the polarization direction control unit, the random number generation unit and the control unit in the random number generation device.

### DESCRIPTION OF EMBODIMENTS

Hereinafter, in order to explain the present disclosure in greater detail, an embodiment of the present disclosure will be explained with reference to the accompanying drawings.

### Embodiment 1.

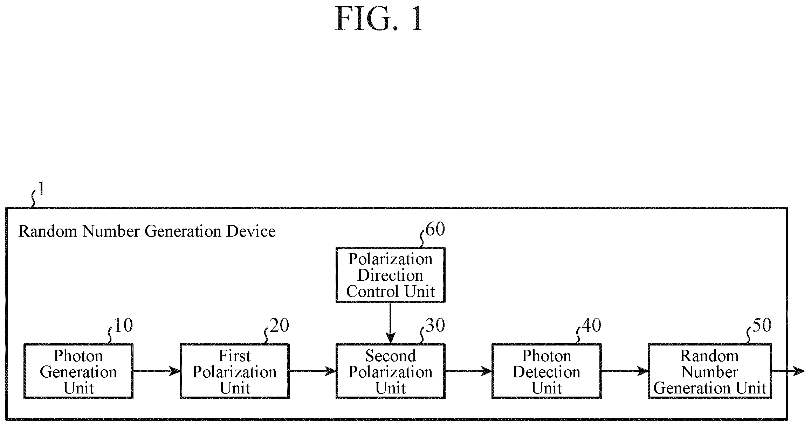

Fig. 1 is a diagram showing an example of the configuration of a random number generation device 1 according to the present disclosure.

The random number generation device 1 generates photons and converts each of the photons generated thereby into linearly polarized light in two steps, and, after that, detects photons and generates a random number using the number of detected photons.

Concretely, the random number generation device 1 shown in Fig. 1 includes a photon generation unit 10, a first polarization unit 20, a second polarization unit 30, a photon detection unit 40, a random number generation unit 50, and a polarization direction control unit 60.

The random number generation device 1 is used for generating a random number in, for example, a receiver for space optical communications (space optical communication receiver).

The photon generation unit 10 generates and outputs a photon.

The photon generation unit 10 is a photon generation device which includes, for example, a light source and an optical attenuator, and generates a photon by attenuating light outputted from the light source by means of the optical attenuator.

The photon generation unit 10 is adjusted in such a way that the average of the photon number distribution is N (N is an arbitrary integer) within an unit time period T.

In the present disclosure, the unit time period T has only to be an arbitrary time period whose maximum is one during which the random number generation device 1 generates a random number.

The photon number distribution is known, and shows the distribution of the number of photons which are expected to be detected within the unit time period.

The first polarization unit 20 converts a photon inputted thereto into polarized light in a first polarization direction, and outputs the polarized light.

Concretely, the first polarization unit 20 converts a photon inputted thereto into, for example, linearly polarized light in the first polarization direction, and outputs the linearly polarized light.

The first polarization unit 20 is a polarization device which is configured using, for example, a polarizer or a polarization beam splitter.

The first polarization unit 20 shown in Fig. 1 is disposed between the photon generation unit 10 and the second polarization unit 30, and receives a photon outputted from the photon generation unit 10.

The second polarization unit 30 converts a photon inputted thereto into polarized light in a second polarization direction and outputs the polarized light, and is configured in such a way as to be able to change the second polarization direction.

Concretely, the second polarization unit 30 converts a photon inputted thereto into, for example, linearly polarized light in the second polarization direction and outputs the linearly polarized light, and is configured in such a way as to be able to change the second polarization direction.

The second polarization unit 30 is a polarization device which is configured using, for example, a polarizer or a polarization beam splitter.

Further, the second polarization unit 30 has a not-illustrated driving unit to change the second polarization direction. The driving unit operates in response to an instruction from the polarization direction control unit 60, and changes the second polarization direction.

The second polarization unit 30 shown in Fig. 1 is disposed between the first polarization unit 20 and the photon detection unit 40, and receives a photon outputted from the first polarization unit 20.

The photon detection unit 40 receives a photon outputted from the photon generation unit 10 via the first polarization unit 20 and the second polarization unit 30, and detects the photon.

The photon detection unit 40 outputs an electric signal indicating the photon detected thereby.

The photon detection unit 40 is configured using, for example, an avalanche photodiode (APD).

The photon detection unit 40 shown in Fig. 1 is disposed between the second polarization unit 30 and the random number generation unit 50, receives a photon outputted from the second polarization unit 30, and outputs an electric signal indicating the photon detected thereby to the random number generation unit 50.

Because what is necessary is just to dispose the single photon detection unit 40, which is shown in Fig. 1, in the random number generation device 1, it is not necessary to dispose multiple photon detection devices. Because of this, the random number generation device can be downsized compared with conventional random number generation devices. Further, the random number generation device can be implemented at a cost low compared with those of conventional random number generation devices.

The random number generation unit 50 generates a random number using the number of photons detected by the photon detection unit 40.

The random number generation unit 50 generates a value which differs depending on whether or not the number of photons detected by the photon detection unit 40 is larger than a predetermined threshold, at each unit time period of T.

The random number generation unit 50 shown in Fig. 1 is disposed at a subsequent stage of the photon detection unit 40 with respect to the traveling direction of photons outputted from the photon generation unit 10, and, on the basis of the electric signal received from the photon detection unit 40, generates a random number using the number of detected photons at each unit time period of T.

Although the explanation is made assuming that the threshold is predetermined, the threshold may be changed by a program or the like. By changing the threshold, the random number generation unit 50 changes the proportions of different output values, such as 0 and 1. Because of this, a random number sequence can be generated more randomly.

The polarization direction control unit 60 performs a process of controlling the second polarization direction on the second polarization unit 30.

Concretely, the polarization direction control unit 60 performs the controlling process in such a way as to change the angle which the first polarization direction of the first polarization unit 20 forms with the second polarization direction of the second polarization unit 30 when viewing toward the traveling direction of photons.

The second polarization direction may be preset, and the random number generation device 1 does not necessarily need to include the polarization direction control unit 60.

In contrast, in the case of controlling the second polarization direction from a remote location, it is configured in such a way that the random number generation device 1 includes the polarization direction control unit 60, a polarization direction control instruction generator is disposed outside the random number generation device 1, and the polarization direction control unit 60 changes the second polarization direction in response to an instruction signal from the polarization direction control instruction generator.

Although the configuration in which the first polarization unit 20 is disposed at a preceding stage of the second polarization unit 30 and the second polarization unit 30 is disposed at a subsequent stage of the first polarization unit 20 is shown in Fig. 1, the arrangement positions of the first polarization unit 20 and the second polarization unit 30 may be reversed.

Further, the first polarization unit 20 may be a polarization device includes, for example, a polarizer and a 1/4 wavelength plate in that order. In this case, the second polarization unit 30 includes, for example, a 1/4 wavelength plate and a polarizer in that order. Light outputted from the first polarization unit 20 in this case has been converted into elliptically polarized light, and light outputted from the second polarization unit 30 has been further converted from the elliptically polarized light into linearly polarized light. Also in this case, in the second polarization unit 30, the not-illustrated driving unit rotates the polarizer in response to an instruction from the polarization direction control unit 60, and changes the second polarization direction.

Also in the configuration of performing the conversion into the above-mentioned elliptically polarized light and the above-mentioned linearly polarized light, the arrangement positions of the first polarization unit 20 and the second polarization unit 30 may be reversed. In this case, the second polarization unit 30 includes a polarizer and a 1/4 wavelength plate in that order, and the first polarization unit 20 includes a 1/4 wavelength plate and a polarizer in that order.

A relation between the polarization direction of the first polarization unit 20 and the polarization direction of the second polarization unit 30 in the random number generation device 1 will be explained. The explanation is made as to a typical example in which each of the first and second polarization units 20 and 30 performs the conversion into linearly polarized light.

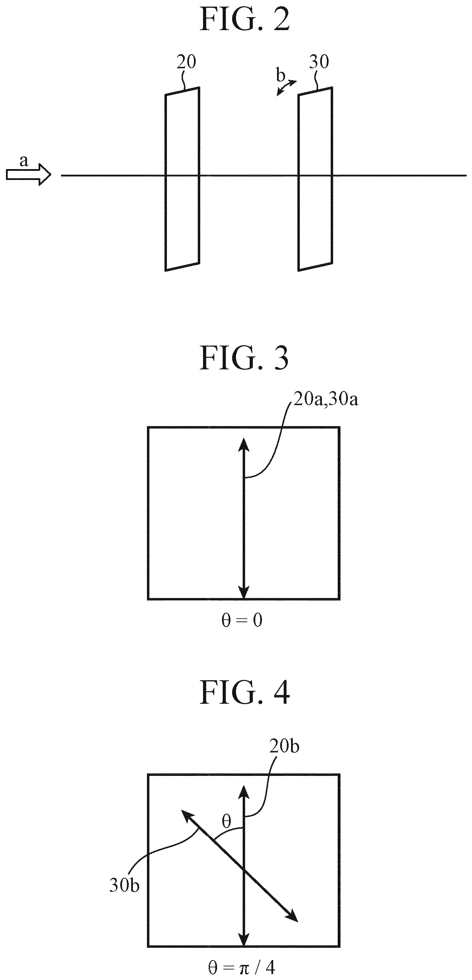

Fig. 2 is a diagram explaining the relation between the first polarization unit 20 and the second polarization unit 30 in the random number generation device 1.

In Fig. 2, an arrow a shows the traveling direction of photons, and a double arrow b shows an example of the driving direction of the second polarization unit 30.

The first polarization unit 20 and the second polarization unit 30 which are shown in Fig. 1 are arranged in the order of the first polarization unit 20 and the second polarization unit 30 when viewing toward the traveling direction a of photons. The second polarization unit 30 is configured in such a way as to be able to be rotated by the not-illustrated driving unit in the direction of, for example, the double arrow b, thereby changing the second polarization direction to the direction of the double arrow b.

The relation between the first polarization direction and the second polarization direction will be explained.

In the following explanation, both a case in which the angle θ which the first polarization direction forms with the second polarization direction is 0 rad (= 0 degrees), and a case in which the angle θ which the first polarization direction forms with the second polarization direction is n/4 rad (= 45 degrees) when viewing toward the arrow a in Fig. 2 are explained.

Fig. 3 is a view explaining the case in which the angle θ which the polarization direction of the first polarization unit 20 forms with the polarization direction of the second polarization unit 30 in the random number generation device 1 is 0.

Fig. 4 is a view explaining the case in which the angle θ which the polarization direction of the first polarization unit 20 forms with the polarization direction of the second polarization unit 30 in the random number generation device 1 is n/4.

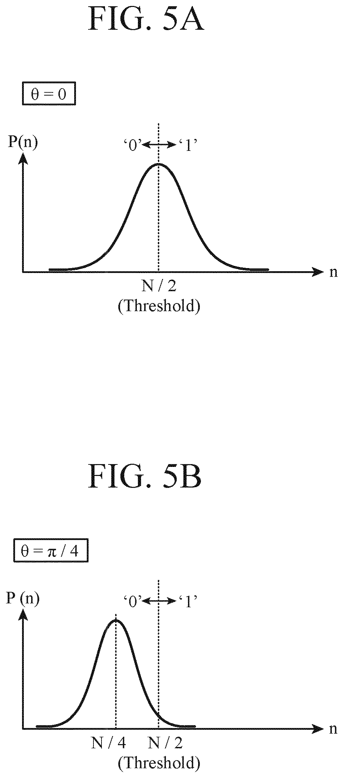

Fig. 5A is a view schematically showing the probability distribution of the number of detected photons in the case of θ=0 (rad), and Fig. 5B is a view schematically showing the probability distribution of the number of detected photons in the case of θ=π/4 (rad) . Figs. 5A and 5B show the distribution of probability P (n) in the case where when the threshold is set to half (N/2) of the number N of photons outputted by the photon generation unit 10, and the number n of photons detected within a unit time period T is less than or equal to the threshold, a value '0' is generated, whereas when the number n of photons detected within a unit time period T is greater than the threshold, a value '1' is generated.

In the case where the angle θ which the polarization direction (first polarization direction) of the first polarization unit 20 forms with the polarization direction (second polarization direction) of the second polarization unit 30 in the random number generation device 1 is 0 (rad), the first polarization direction 20a and the second polarization direction 30a coincide and are the same, as shown in Fig. 3.

In this case, a photon outputted from the photon generation unit 10 is first converted into linearly polarized light by the first polarization unit 20. At this time, the first polarization unit 20 passes a photon having a component in the first polarization direction, out of components which are perpendicular to each other in photons (a component in the first polarization direction, and a component in a polarization direction perpendicular to this first polarization direction). The number of photons passing through the first polarization unit 20 has the highest probability of being one-half of the number N of photons inputted to the first polarization unit 20, from the perspective of quantum mechanics.

Next, a photon outputted from the first polarization unit 20 passes through the second polarization unit 30 which performs the conversion into the same polarization direction as the polarization direction of the first polarization unit 20, just as it is.

Because of this, the number n of photons detected by the photon detection unit 40 within a unit time period T has a distribution in which the average is N/2, as shown in Fig. 5A.

Then, the value '0' and the value '1' are generated randomly by the random number generation device 1 with their respective proportions being approximately 1/2.

In the case where the angle θ which the polarization direction of the first polarization unit 20 forms with the polarization direction of the second polarization unit 30 in the random number generation device 1 is n/4 (rad), the first polarization direction 20b and the second polarization direction 30b differ from each other by π/4 (rad), as shown in Fig. 4.

In this case, a photon outputted from the photon generation unit 10 is first converted into linearly polarized light by the first polarization unit 20. At this time, the first polarization unit 20 causes a photon having a component in the first polarization direction, out of components which are perpendicular to each other in photons (a component in the first polarization direction, and a component in a polarization direction perpendicular to this first polarization direction), to pass therethrough, in the above-mentioned way. The number of photons passing through the first polarization unit has the highest probability of being one-half (N/2) of the number N of photons inputted to the first polarization unit 20, from the perspective of quantum mechanics.

Next, with respect to photons outputted from the first polarization unit 20, the second polarization unit 30 passes a photon having a component in the second polarization direction, out of components which are perpendicular to each other in the photon (a component having the second polarization direction, and a component having a polarization direction perpendicular to this second polarization direction). The number n of photons passing through the second polarization unit 30 has the highest probability P(n) of being one-half (N/4) of the number N/2 of photons inputted to the second polarization unit 30, from the perspective of quantum mechanics.

Because of this, the number n of photons detected by the photon detection unit 40 within a unit time period T has a distribution in which the average is N/4, as shown in Fig. 5B.

A random number sequence is generated randomly in a state where the proportion in which the value '0' appears in the values '0' and '1' generated by the random number generation device 1 is higher than that in which the value '1' appears.

As mentioned above, the random number generation device 1 can generate random numbers and a random number sequence by changing the angle which the first polarization direction forms with the second polarization direction, with changing the proportions of the values generated thereby.

Next, the operation of the random number generation device 1 will be explained. The explanation is made as to a typical example in which each of the first and second polarization units 20 and 30 performs the conversion into linearly polarized light.

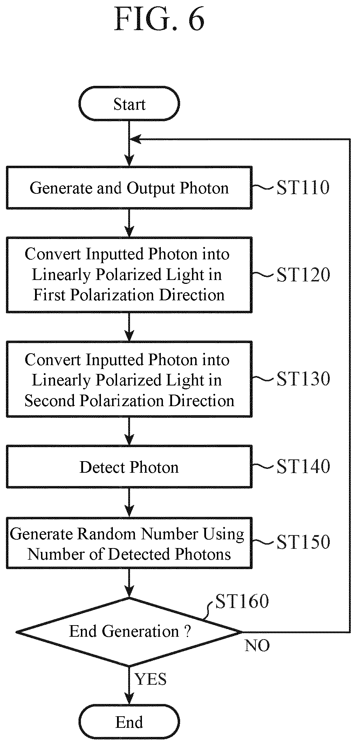

Fig. 6 is a flowchart showing the operation of the random number generation device 1.

When receiving an instruction from, for example, an external device which performs a process using a random number, the random number generation device 1 starts the operation of generating a random number (Start).

The photon generation unit 10 generates and outputs a photon (step ST110).

Concretely, the photon generation unit 10, for example, attenuates light outputted from the light source, to generate a photon, and outputs the photon generated thereby to the first polarization unit 20.

The first polarization unit 20 converts the photon inputted thereto from the photon generation unit 10 into linearly polarized light in the first polarization direction (step ST120).

Concretely, the first polarization unit 20 receives the photon outputted from the photon generation unit 10, and converts the photon into linearly polarized light in the first polarization direction, by passing one component, out of the components of the light which are perpendicular to each other, and not passing the other one of the components. The first polarization unit 20 outputs a photon which is converted into linearly polarized light in the first polarization direction to the second polarization unit 30.

The second polarization unit 30 converts the photon inputted thereto from the first polarization unit 20 into linearly polarized light in the second polarization direction (step ST130).

Concretely, the second polarization unit 30 receives the photon outputted from the photon generation unit 10, and converts the photon into linearly polarized light in the second polarization direction, by passing one component, out of the components of the light which are perpendicular to each other, and not passing the other one of the components. The second polarization unit 30 outputs a photon which is converted into linearly polarized light in the second polarization direction to the photon detection unit 40.

The photon detection unit 40 detects the photon (step ST140).

Concretely, when receiving the photon outputted from the second polarization unit 30, the photon detection unit 40 detects and converts the photon into an electric signal. The photon detection unit 40 outputs the electric signal indicating the photon detected thereby to the random number generation unit 50.

The random number generation unit 50 generates a random number using the number of detected photons (step ST150).

Concretely, the random number generation unit 50 counts the number of times of receiving the electric signal from the photon detection unit 40 within a unit time period T, and determines the number n of photons detected within the unit time period T. The random number generation unit 50 generates and outputs a value which differs depending on whether or not it is greater than or equal to the predetermined threshold (the threshold is N/2 shown in Fig. 5, for example) . A more concrete example of the processing in the random number generation unit 50 will be mentioned later.

After the process of step ST150 is completed, a not-illustrated control unit determines whether or not to end the generation of a random number (step ST160).

In step ST160, when the not-illustrated control unit determines not to end the generation (when "NO" in step ST160), the processing is repeated from step ST110, whereas when the not-illustrated control unit determines to end the generation (when "YES" in step ST160), the random number generation device 1 ends the processing.

Next, an example of the processing in which the random number generation device 1 generates a random number will be explained.

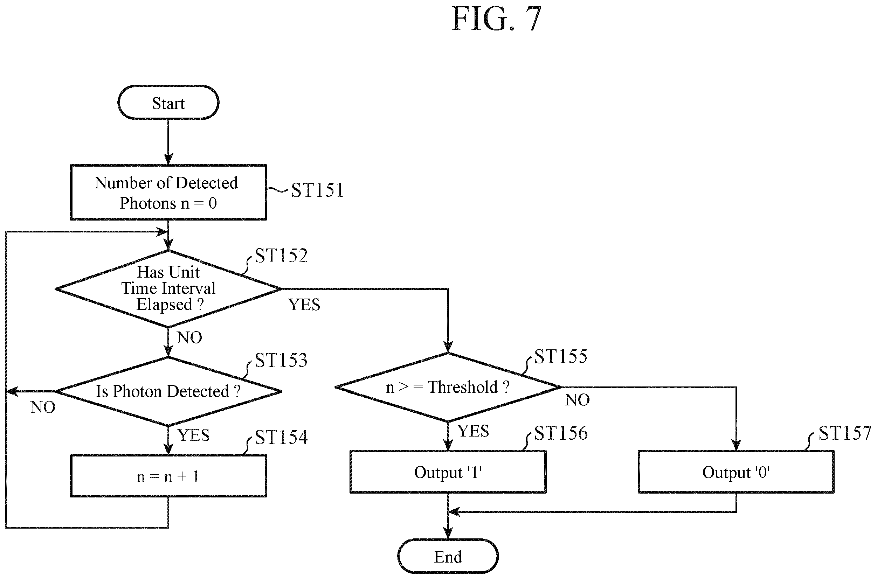

Fig. 7 is a flowchart showing the processing of the random number generation unit 50 in the random number generation device 1.

When the random number generation device 1 starts to operate, for example, the random number generation unit 50 starts its processing (start). At this time, a not-illustrated timer starts to count time.

The random number generation unit 50 resets the detected photon number n to zero (step ST151).

The random number generation unit 50 checks the timing by the timer, and determines whether a unit time period T has elapsed (step ST152).

When, in step ST152, determining that a unit time period T has not elapsed (when "No" in step ST152), the random number generation unit 50 determines whether a photon has been detected (step ST153).

When the random number generation unit 50, in step ST153, determines that a photon has been detected (when "Yes" in step ST153), the random number generation unit increments the detected photon number n by 1 (the detected photon number n = n+1) (step ST154).

When the process of step ST154 is completed, the random number generation unit 50 shifts to the process of step ST152.

When the random number generation unit 50, in step ST153, determines that a photon has not been detected (when "No" in step ST153), the random number generation unit shifts to the process of step ST152, and then checks the timing by the timer and determines whether or not a unit time period T has elapsed.

When, in step ST152, determining that a unit time period T has elapsed (when "Yes" in step ST152), the random number generation unit 50 determines whether or not the detected photon number n is greater than or equal to the threshold (n >= threshold ?) (step ST155).

When, in step ST155, determining that the detected photon number n is greater than or equal to the threshold (when "Yes" in step ST155), the random number generation unit 50 outputs the value '1' (step ST156) and ends the processing.

When, in step ST155, determining that the detected photon number n is not greater than or equal to the threshold (when "No" in step ST155), the random number generation unit 50 outputs the value '0' (step ST157) and ends the processing.

A hardware configuration related to the random number generation device 1 of the present disclosure will be explained.

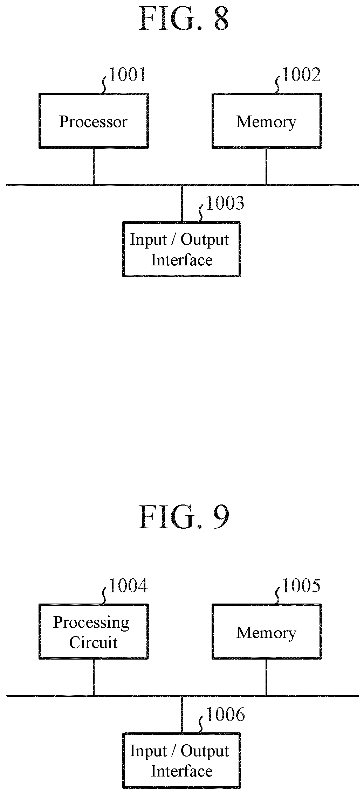

Fig. 8 is a view showing an example of the hardware configuration of the random number generation unit 50, the polarization direction control unit 60 and the control unit in the random number generation device 1.

Fig. 9 is a view showing another example of the hardware configuration of the random number generation unit 50, the polarization direction control unit 60 and the control unit in the random number generation device 1.

Each of the following units: the random number generation unit 50, the polarization direction control unit 60 and the not-illustrated control unit in the random number generation device 1 according to Embodiment 1 is implemented by hardware as shown in Fig. 8 or 9.

Each of the following units: the random number generation unit 50, the polarization direction control unit 60 and the not-illustrated control unit in the random number generation device 1 is constituted by a processor 1001 and a memory 1002, as shown in Fig. 8.

The processor 1001 and the memory 1002 are mounted in, for example, a computer.

A program for causing it to function as the random number generation unit 50, the polarization direction control unit 60 and the not-illustrated control unit is stored in the memory 1002. The processor 1001's reads and executes the program stored in the memory 1002, so that the functions of the random number generation unit 50, the polarization direction control unit 60 and the not-illustrated control unit are implemented.

Input and output of data between the random number generation unit 50, the polarization direction control unit 60 and the not-illustrated control unit, and components other than these units are performed via an input/output interface 1003.

As the processor 1001, for example, a central processing unit (CPU), a graphics processing unit (GPU), a microprocessor, a microcontroller, or a digital signal processor (DSP) is used. The memory 1002 may be a non-volatile or volatile semiconductor memory, such as a random access memory (RAM), a read only memory (ROM), an erasable programmable ROM (EPROM), an electrically erasable programmable read only memory (EEPROM) or a flash memory, a magnetic disc, such as a hard disc or a flexible disc, an optical disc, such as a compact disc (CD) or a digital versatile disc (DVD), or a magneto-optical disc.

As an alternative, the functions of the random number generation unit 50, the polarization direction control unit 60 and the not-illustrated control unit may be implemented by a processing circuit 1004 for exclusive use, as shown in Fig. 9.

Input and output of data between the random number generation unit 50, the polarization direction control unit 60 and the not-illustrated control unit, and components other than these units are performed via an input/output interface 1006.

Further, in this case, a memory 1005 or another not-illustrated memory may be provided in such a way as to temporarily store data calculated by each component.

As the processing circuit 1004, for example, a single circuit, a composite circuit, a programmable processor, a parallel programmable processor, an application specific integrated circuit (ASIC), a programmable logic device (PLD), a field-programmable gate array (FPGA), a system-on-a-chip (SoC), or a system large-scale integration (LSI) is used.

The functions of the random number generation unit 50, the polarization direction control unit 60 and the not-illustrated control unit may be implemented by different processing circuits 1004, or may be implemented collectively by a processing circuit 1004.

As an alternative, some functions of the random number generation unit 50, the polarization direction control unit 60 and the not-illustrated control unit may be implemented by the processor 1001 and the memory 1002, and the remaining functions may be implemented by the processing circuit 1004.

In Embodiment 1, a concrete example of the present disclosure is shown. Therefore, the shape, the placement, the material, and so on of each component are examples, but are not limited to the examples. Further, each figure shows the concept of the present disclosure, and may not illustrate strictly.

The random number generation device according to the present disclosure is configured in such a way as to include: the photon generation unit to generate and output a photon; the first polarization unit to convert a photon inputted thereto into polarized light in the first polarization direction, and to output this polarized light; the second polarization unit to convert a photon inputted thereto into polarized light in the second polarization direction, and to output this polarized light, the second polarization unit being able to change the second polarization direction; the photon detection unit to receive a photon outputted from the photon generation unit via the first polarization unit and the second polarization unit, and to detect the photon; and the random number generation unit to generate a random number using the number of photons detected by the photon detection unit.

Because of this, an advantageous effect of being able to provide a random number generation device that does not have to include multiple photon detectors is provided.

In the random number generation device according to the present disclosure, the first polarization unit is configured in such a way as to convert a photon inputted thereto into linearly polarized light in the first polarization direction and to output this linearly polarized light, and the second polarization unit is configured in such a way as to convert a photon inputted thereto into linearly polarized light in the second polarization direction and to output this linearly polarized light, and to be able to change the second polarization direction.

Because of this, an advantageous effect of being able to provide a random number generation device that change the first linearly polarized light and the second linearly polarized light to light rays in different polarization directions, and that generates a random number sequence including values whose proportions are different is provided.

In the random number generation device according to the present disclosure, the random number generation unit is further configured in such a way as to generate a value at a unit time period, the value being different depending on whether or not the number of photons detected by the photon detection unit is larger than the predetermined threshold.

Because of this, an advantageous effect of being able to provide a random number generation device that generates a random number which depends on a relation between the number of detected photons within each unit time period and the threshold is provided.

In the random number generation device according to the present disclosure, the random number generation unit is further configured in such a way as to change the threshold.

Because of this, an advantageous effect of being able to provide a random number generation device that changes the threshold as needed and generates a random number sequence including values whose proportions are different is provided.

The random number generation device according to the present disclosure is configured in such a way as to further include the polarization direction control unit to control the polarization direction of the second polarization unit.

Because of this, an advantageous effect of being able to provide a random number generation device that changes the polarization direction as needed and generates a random number sequence including values whose proportions are different is provided.

In addition, in a case where the random number generation device according to the present disclosure is used for space optical communication receivers, the random number generation device provides high confidentiality for information in, for example, communications via satellites can be provided.

It is to be understood that various changes can be made in an arbitrary component according to the embodiment or an arbitrary component according to the embodiment can be omitted within the scope of the present disclosure.

### INDUSTRIAL APPLICABILITY

The random number generation device according to the present disclosure is suitable for use in, for example, information communications.

### REFERENCE SIGNS LIST

1 random number generation device, 10 photon generation unit, 20 first polarization unit, 20a, 20b first polarization direction, 30 second polarization unit, 30a, 30b second polarization direction, 40 photon detection unit, 50 random number generation unit, 60 polarization direction control unit, 1001 processor, 1002 memory, 1003 input/output interface, 1004 processing circuit, 1005 memory, and 1006 input/output interface.

## Claims

1. A random number generation device (1) comprising:
a photon generation unit (10) configured to generate and output a photon in such a way that an average of a photon number distribution is N within a unit time period, wherein N is an integer;
a first polarization unit (20) configured to convert a photon inputted to the first polarization unit (20) into polarized light in a first polarization direction, and to output the polarized light;
a second polarization unit (30) configured to convert a photon inputted to the second polarization unit (30) into polarized light in a second polarization direction, and to output the polarized light, the second polarization unit being able to change the second polarization direction;
a photon detection unit (40) configured to receive a photon outputted from the photon generation unit via the first polarization unit (20) and the second polarization unit (30), and to detect and convert the photon into an electrical signal; and
a random number generation unit (50) configured to generate a random number using a detection result by the photon detection unit (40) and depending on whether the number of photons detected within the unit time period is equal to or larger than a predetermined threshold, wherein the number of photons is determined by counting the number of times of receiving the electric signal from the photon detection unit within the unit time period.

2. The random number generation device (1) according to claim **1,** wherein
the first polarization unit (20) converts the photon inputted to the first polarization unit (20) into linearly polarized light in the first polarization direction and outputs the linearly polarized light, and
the second polarization unit (30) converts the photon inputted to the second polarization unit (30) into linearly polarized light in the second polarization direction and outputs the linearly polarized light, and is able to change the second polarization direction.

3. The random number generation device (1) according to claim 1 or 2, wherein
the random number generation unit (50) generates a value at the unit time period, the value being different depending on whether or not the number of photons detected is larger than the predetermined threshold.

4. The random number generation device (1) according to claim 3, wherein
the random number generation unit (50) changes the threshold.

5. The random number generation device (1) according to claim 1 or 2, further comprising a polarization direction control unit (60) to control the second polarization direction.

6. The random number generation device (1) according to claim 3, further comprising a polarization direction control unit (60) to control the second polarization direction.

7. The random number generation device (1) according to claim 4, further comprising a polarization direction control unit (60) to control the second polarization direction.

## Patentansprüche

1. Zufallszahl-Generierungseinrichtung (1), umfassend:
eine Photonen-Erzeugungseinheit (10), die eingerichtet ist, ein Photon in einer solchen Weise zu erzeugen und auszugeben, dass ein Durchschnitt einer Photonenzahlverteilung N innerhalb einer Einheitszeitperiode liegt, wobei N eine ganze Zahl ist;
eine erste Polarisationseinheit (20), die eingerichtet ist, ein in die erste Polarisationseinheit (20) eingegebenes Photon in polarisiertes Licht in einer ersten Polarisationsrichtung umzuwandeln, und das polarisierte Licht auszugeben;
eine zweite Polarisationseinheit (30), die eingerichtet ist, ein in die zweite Polarisationseinheit (30) eingegebenes Photon in polarisiertes Licht in einer zweiten Polarisationsrichtung umzuwandeln, und das polarisierte Licht auszugeben, wobei die zweite Polarisationseinheit in der Lage ist, die zweite Polarisationsrichtung zu ändern;
eine Photonen-Erfassungseinheit (40), die eingerichtet ist, ein von der Photonen-Erzeugungseinheit über die erste Polarisationseinheit (20) und die zweite Polarisationseinheit (30) ausgegebenes Photon zu empfangen, und das Photon zu erfassen und in ein elektrisches Signal umzuwandeln; und
eine Zufallszahl-Erzeugungseinheit (50), die eingerichtet ist, eine Zufallszahl unter Verwendung eines Erfassungsergebnisses durch die Photonen-Erfassungseinheit (40) und in Abhängigkeit davon, ob die Anzahl der innerhalb der Einheitszeitperiode erfassten Photonen gleich oder größer als ein vorbestimmter Schwellenwert ist, zu erzeugen, wobei die Anzahl der Photonen durch Zählen der Anzahl von Malen des Empfangs des elektrischen Signals von der Photonen-Erfassungseinheit innerhalb der Einheitszeitperiode bestimmt wird.

2. Zufallszahl-Generierungseinrichtung (1) nach Anspruch 1, wobei
die erste Polarisationseinheit (20) das in die erste Polarisationseinheit (20) eingegebene Photon in linear polarisiertes Licht in der ersten Polarisationsrichtung umwandelt, und das linear polarisierte Licht ausgibt, und
die zweite Polarisationseinheit (30) das in die zweite Polarisationseinheit (30) eingegebene Photon in linear polarisiertes Licht in der zweiten Polarisationsrichtung umwandelt, und das linear polarisierte Licht ausgibt, und in der Lage ist, die zweite Polarisationsrichtung zu ändern.

3. Zufallszahl-Generierungseinrichtung (1) nach Anspruch 1 oder 2, wobei
die Zufallszahl-Generierungseinheit (50) einen Wert in der Einheitszeitperiode generiert, wobei der Wert in Abhängigkeit davon unterschiedlich ist, ob die Anzahl der erfassten Photonen größer als der vorbestimmte Schwellenwert ist oder nicht.

4. Zufallszahl-Generierungseinrichtung (1) nach Anspruch 3, wobei
die Zufallszahl-Generierungseinheit (50) den Schwellenwert ändert.

5. Zufallszahl-Generierungseinrichtung (1) nach Anspruch 1 oder 2, ferner umfassend eine Polarisationsrichtungssteureinheit (60), um die zweite Polarisationsrichtung zu steuern.

6. Zufallszahl-Generierungseinrichtung (1) nach Anspruch 3, ferner umfassend eine Polarisationsrichtungssteureinheit (60), um die zweite Polarisationsrichtung zu steuern.

7. Zufallszahl-Generierungseinrichtung (1) nach Anspruch 4, ferner umfassend eine Polarisationsrichtungssteureinheit (60), um die zweite Polarisationsrichtung zu steuern.

## Revendications

1. Dispositif de génération de nombre aléatoire (1), comprenant :
une unité de génération de photons (10) configurée pour générer et délivrer en sortie un photon de telle sorte qu'une moyenne d'une distribution de nombres de photons soit N dans une période de temps unitaire, dans lequel N est un nombre entier ;
une première unité de polarisation (20) configurée pour convertir un photon entré dans la première unité de polarisation (20) en une lumière polarisée dans une première direction de polarisation, et pour délivrer en sortie la lumière polarisée ;
une seconde unité de polarisation (30) configurée pour convertir un photon entré dans la seconde unité de polarisation (30) en une lumière polarisée dans une seconde direction de polarisation, et pour délivrer en sortie la lumière polarisée, la seconde unité de polarisation étant capable de changer la seconde direction de polarisation ;
une unité de détection de photon (40) configurée pour recevoir un photon en sortie de l'unité de génération de photons via la première unité de polarisation (20) et la seconde unité de polarisation (30), et pour détecter et convertir le photon en un signal électrique ; et
une unité de génération de nombre aléatoire (50) configurée pour générer un nombre aléatoire en utilisant un résultat de détection par l'intermédiaire de l'unité de détection de photon (40) et selon que le nombre de photons détectés dans la période de temps unitaire soit égal ou supérieur à un seuil prédéterminé, dans lequel le nombre de photons est déterminé en comptant le nombre d'instants de réception du signal électrique en provenance de l'unité de détection de photon dans la période de temps unitaire.

2. Dispositif de génération de nombre aléatoire (1) selon la revendication 1, dans lequel
la première unité de polarisation (20) convertit le photon entré dans la première unité de polarisation (20) en une lumière polarisée linéairement dans la première direction de polarisation et délivre en sortie la lumière polarisée linéairement, et
la seconde unité de polarisation (30) convertit le photon entré dans la seconde unité de polarisation (30) en une lumière polarisée linéairement dans la seconde direction de polarisation et délivre en sortie la lumière polarisée linéairement, et est capable de changer la seconde direction de polarisation.

3. Dispositif de génération de nombre aléatoire (1) selon la revendication 1 ou 2, dans lequel
l'unité de génération de nombre aléatoire (50) génère une valeur au niveau de la période de temps unitaire, la valeur étant différente selon que le nombre de photons détectés soit supérieur ou non au seuil prédéterminé.

4. Dispositif de génération de nombre aléatoire (1) selon la revendication 3, dans lequel
l'unité de génération de nombre aléatoire (50) modifie le seuil.

5. Dispositif de génération de nombre aléatoire (1) selon la revendication 1 ou 2, comprenant en outre une unité de commande de direction de polarisation (60) pour commander la seconde direction de polarisation.

6. Dispositif de génération de nombre aléatoire (1) selon la revendication 3, comprenant en outre une unité de commande de direction de polarisation (60) pour commander la seconde direction de polarisation.

7. Dispositif de génération de nombre aléatoire (1) selon la revendication 4, comprenant en outre une unité de commande de direction de polarisation (60) pour commander la seconde direction de polarisation.
